# EUROPÄISCHE PATENTSCHRIFT

(11) **EP 4 409 537 B1**
(45) Veröffentlichungstag und Bekanntmachung des Hinweises auf die Patenterteilung: **03.06.2026**
(21) Anmeldenummer: 22773653.5
(22) Anmeldetag: 07.09.2022
(51) Int. Cl.: G06V 10/25, G06V 10/82, G06V 20/56

(54) **VERFAHREN ZUR SEMANTISCHEN SEGMENTIERUNG EINES BILDES UND GERÄT**
METHOD FOR SEMANTIC SEGMENTATION OF AN IMAGE AND DEVICE
PROCÉDÉ DE SEGMENTATION SÉMANTIQUE D'UNE IMAGE ET APPAREIL

(30) Priorität: 30.09.2021 DE 102021210996
(43) Veröffentlichungstag der Anmeldung: 07.08.2024
(73) Patentinhaber: Robert Bosch GmbH, 70442 Stuttgart (DE)
(72) Erfinder: WAELBERS (TOPQUARK), Steven, 2000 Antwerpen (BE); PINAYA GUTIERREZ, Benjamin, 3001 Leuven (BE)
(86) Internationale Anmeldenummer: PCT/EP2022/074791
(87) Internationale Veröffentlichungsnummer: WO 2023/052056

(56) Entgegenhaltungen:
- XU YU-SYUAN ET AL: "Dynamic Video Segmentation Network", ARXIV, 1 June 2018 (2018-06-01), pages 1 - 10, XP093006689
- CORDTS MARIUS ET AL: "The Cityscapes Dataset for Semantic Urban Scene Understanding", 2016 IEEE CONFERENCE ON COMPUTER VISION AND PATTERN RECOGNITION (CVPR), IEEE, 27 June 2016 (2016-06-27), pages 3213 - 3223, XP033021503, DOI: 10.1109/CVPR.2016.350
- FRANZIUS MATHIAS ET AL: "Embedded Robust Visual Obstacle Detection on Autonomous Lawn Mowers", 2017 IEEE CONFERENCE ON COMPUTER VISION AND PATTERN RECOGNITION WORKSHOPS (CVPRW), IEEE, 21 July 2017 (2017-07-21), pages 361 - 369, XP033145793, DOI: 10.1109/CVPRW.2017.50

## Beschreibung

Die vorliegende Erfindung betrifft ein Verfahren zur semantischen Segmentierung eines Bildes, das von einem Umgebungserfassungsmittel eines, insbesondere sich automatisiert bewegenden, Geräts erfasst worden ist, ein solches Gerät sowie ein Rechensystem und ein Computerprogramm zu dessen Durchführung.

### Hintergrund der Erfindung

Mobile Bearbeitungsgeräte wie z.B. Rasenmähroboter, Saug- oder Wischroboter oder andere Haushaltsroboter bewegen sich typischerweise in einer zu bearbeitenden Umgebung wie z.B. in einem Garten oder in einer Wohnung. Ein grundlegendes Problem dabei besteht in der Bestimmung der zulässigen Bearbeitungsfläche, also im Falle des Rasenmähroboters z.B., bis wohin sich der zu mähende Rasen erstreckt, sodass der Rasen zum einen möglichst vollständig gemäht werden kann, sich der Roboter aber andererseits möglichst nicht über den Rasen hinausbewegt, z.B. auf eine Straße oder dergleichen.

Die "XU YU-SYAN ET AL: Dynamic Video Segmentation Network, ARXIV, 1. Juni 2018 (2018-06-01), Seiten 1-10" beschäftigt sich mit der semantischen Segmentierung eines Bildes. Die darin referenzierte "CORDTS MARIUS ET AL: The Cityscapes Dataset for Segmantic Urban Scene Understanding, 2016 IEEE Conference on Computer Vision and Pattern Recognition (CVPR), IEEE, 27. Juni 2016 (2016-06-27), Seiten 3213-3223, XP033021503" stellt eine Bezug zu sich bewegenden Fahrzeugen her.

### Offenbarung der Erfindung

Erfindungsgemäß werden ein Verfahren zur semantischen Segmentierung eines Bildes, ein Gerät sowie ein Rechensystem und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit vorzugsweise mobilen Geräten, die sich insbesondere automatisiert bewegen, wie vorzugsweise ein Roboter, z.B. ein Rasenmähroboter. Wenngleich die Erfindung nachfolgend vorwiegend in Bezug auf einen Rasenmähroboter erläutert werden soll, so kommen auch andere mobile Geräte oder Roboter in Betracht, insbesondere ein Haushaltsroboter, wie z.B. ein Saug- und/oder Wischroboter, Boden- oder Straßenreinigungsgeräte, zumindest teilweise automatisierte Fahrzeuge, oder auch Drohnen.

Es ist in der Regel gewünscht, dass z.B. ein Rasenmähroboter innerhalb der Grenzen des Gartens bzw. Rasens bleibt, da es Bereiche geben kann, die für einen optimalen Betrieb nicht geeignet sind, wie Teiche, Schlamm, Schotterstraßen, Blumenbeete usw. Hierzu kann im Garten bzw. im Rasen, insbesondere an den Rändern des Rasens bzw. dort, bis wohin der Rasenmähroboter mähen soll, ein Draht oder ein Kabel verlegt werden, das mittels eines Sensors im Roboter erfasst oder detektiert werden kann. In diesem Zusammenhang kann auch von einer Rasenkante gesprochen werden, an der ein solcher Draht verlegt wird. Dies erlaubt zwar, die Bewegung des Roboters wie gewünscht zu begrenzen, allerdings ist ein hoher Aufwand durch das Verlegen des Drahts bzw. Kabels erforderlich.

Eine andere Möglichkeit, damit ein (mobiles) Gerät bestimmte Merkmale in der Umgebung wie z.B. eine Rasenkante im Falle eines Rasenmähroboters erkennen kann, ist die Verwendung von Umgebungserfassungsmitteln oder eines oder mehrerer Sensoren wie z.B. Kameras bzw. Videokameras, Thermokameras, Radar-Sensoren, Lidar-Sensoren, Laser-Entfernungsmessern, Ultraschallsensoren, Inertialsensoren und/oder Odometern. Insbesondere sollen im Rahmen der vorliegenden Erfindung Erfassungsmittel bzw. Sensoren betrachtet werden, die eine bildliche Darstellung der Umgebung ermöglichen, also vorzugsweise Kameras oder Videokameras. Ebenso können aber z.B. mittels anderer Sensoren wie z.B. Lidar- oder Ultraschallsensoren ggf. Tiefeninformationen erhalten werden, die sich bildlich oder als (digitale) Bilder darstellen lassen. Ein solches Bild der Umgebung kann dann analysiert werden, um bestimmte Dinge oder Objekte in der Umgebung wie eben z.B. die erwähnte Rasenkante im Falle eines Rasenmähroboters zu erkennen oder zu identifizieren.

Hier kommt insbesondere die sog. semantische Segmentierung in Betracht. Dabei wird jedem Bildpunkt (Pixel) in einem Bild eine Klasse von mehreren Klassen zugeordnet, d.h. die Bildpunkte werden beschriftet oder klassifiziert. Hierzu werden zunächst typischerweise Merkmale der Bildpunkte bestimmt oder extrahiert, basierend worauf dann die Klasse zugeordnet wird. Solche Merkmale können z.B. Form, Farbe, Kontext, Muster, Lichtvarianz und/oder Bildkontext sein. So könnte z.B. einem Bildpunkt die Farbe Grün zugeordnet werden und die umgebenden Bildpunkte könnten ebenfalls alle Grün sein. Dies würde auf Rasen hindeuten.

Als Klassen kommen dabei verschiedene Merkmale in Betracht. Beim Beispiel des Rasenmähroboters können z.B. in einem einfachen Fall zwei Klassen verwendet werden, nämlich "Rasen" und "nicht Rasen", d.h. es wird für jeden Bildpunkt des Bildes bestimmt, ob dieser Rasen zeigt oder nicht. Es versteht sich, dass auch mehr als zwei Klassen verwendet werden können, um z.B. auch Wege, Straßen, Gebäude, Fahrzeuge oder Menschen zu erkennen und ggf. einem Bildpunkt zu zuordnen. Denkbar ist auch - in Anlehnung an die Klasse "nicht Rasen" - eine Klasse "Hintergrund", der alles zugeordnet wird, was nicht einer anderen Klasse zugeordnet wird. Durch all diese Beschriftungen werden im Vergleich zur reinen Objekterkennung, bei der (nur) Objekte in einem Bild erkannt werden, mehr Informationen hinzugefügt.

Grundsätzlich muss die Klassifizierung nicht für jeden einzelnen Bildpunkt erfolgen, sondern sie kann auch für Segmente oder Teile des Bildes erfolgen, die jeweils mehrere Bildpunkte umfassen. Solche Segmente können fest vorgegeben sein oder aber auch im Rahmen der semantischen Segmentierung erst gebildet werden, ggf. auch mit verschiedenen Größen innerhalb des Bildes. Hierzu werden bevorzugt eines oder mehrere künstliche neuronale Netze oder allgemein auf künstlicher Intelligenz basierende Mustererkennungsverfahren eingesetzt, worauf nachfolgend noch detaillierter eingegangen werden soll.

Auf diese Weise kann also aus dem Bild (Eingangsbild) ein klassifiziertes Ergebnisbild (Ausgangsbild), also eine Art Karte, erzeugt werden, das angibt, wo sich bestimmte Objekte oder allgemein Merkmale befinden. In dem einfachen Beispiel mit den zwei Klassen "Rasen" und "nicht Rasen" kann durch eine Grenze zwischen Bereichen des Bildes, die entweder "Rasen" oder "nicht Rasen" (das zugehörige Ergebnisbild kann z.B. rein schwarz/weiß sein) zugeordnet sind, eine Rasenkante erkannt oder bestimmt werden. Das Ergebnisbild wird dann zur Steuerung des Geräts verwendet, d.h. es kann z.B. vor bzw. bei Erreichen einer Rasenkante angehalten oder abgebogen werden. Denkbar ist zudem, dass z.B. zwischen noch zu mähendem Rasen und bereits gemähtem Rasen als Klassen unterschieden wird.

An dieser Stelle sei erwähnt, dass zwar bevorzugt Kameras oder Videokameras an oder in einem solchen mobilen Gerät zum Erfassen solcher (digitaler) Bilder in Betracht kommen, jedoch sollen im Rahmen der vorliegenden Erfindung, wie schon erwähnt, auch mit anderen Sensoren wie den erwähnten Lidar- oder Ultraschallsensoren oder auch Thermokameras erfasste oder ggf. durch Weiterverarbeitung erhaltene Umgebungsdarstellungen als Bild verstanden werden; auch dort kann dann die semantische Segmentierung angewendet werden.

Indem dieses Vorgehen insbesondere wiederholt oder kontinuierlich für ein jeweils aktuelles Bild der Umgebung, also insbesondere bei Bewegung des (mobilen) Geräts, vorgenommen wird, kann das mobile Gerät basierend auf dem jeweils aktuellen Ergebnisbild betrieben oder gesteuert werden; so kann z.B. ein Rasenmähroboter derart gesteuert werden, dass er nur bis zu einer erkannten Rasenkante fährt (und dabei mäht), dann aber z.B. entlang der Rasenkante weiterfährt, nicht jedoch darüber hinaus.

Da die semantische Segmentierung mehr Informationen zu einem Bild hinzufügt, kann sie vor allem im Bereich selbstfahrender Autos verwendet werden, um mehrere Objekte und ihre jeweiligen Klassen, z.B. Autos, Personen, Verkehrszeichen, Straßenhindernisse usw., auf einem Bild (besser) zu erkennen. Auch andere autonome Roboter können die semantische Segmentierung verwenden, um mehr Informationen in ihrer Umgebung zu erhalten; bei Roboterarmen kann sie z.B. verwendet werden, um zu erkennen, welche Objekte sie auswählen sollen, bei Drohnen kann sie z.B. verwendet werde, um Himmelsgrenzen und Hindernisse zu erkennen.

Diese semantische Segmentierung erfordert typischerweise aber eine hohe Rechenleistung. Daher bleibt die Verwendung der semantischen Segmentierung bei kleinen (mobilen und insbesondere autonomen) Geräten oder Fahrzeugen aufgrund der hohen Rechenanforderungen und der komplexen Architekturen tiefer neuronaler Netze, die erforderlich sind, um die semantische Segmentierung schnell und genau zu machen, eine Herausforderung.

Im Rahmen der vorliegenden Erfindung wird daher vorgeschlagen, in dem Bild einen Bereich, also einen Teil des Bildes, auszuwählen, und bei der semantischen Segmentierung des Bildes in diesem Bereich einen höheren Anteil der (zur Verfügung stehenden) Rechenleistung eines ausführenden Rechensystems zu verwenden als für den Rest des Bildes, also den nicht ausgewählten Bereich, und zwar zumindest bezogen auf einen Anteil des ausgewählten Bereichs an dem Bild. Mit anderen Worten wird also die zur Verfügung stehenden Rechenleistung (jedenfalls soweit sie für die semantische Segmentierung verwendet wird oder werden kann) derart verwendet oder aufgeteilt, dass für den ausgewählten Bereich pro Bildanteil eine höhere Rechenleistung verwendet wird als für den Rest. Wenn der ausgewählte Bereich z.B. die Hälfte des Bildes (also die Hälfte der im Bild vorhandenen Bildpunkte) umfasst, wird für den ausgewählten Bereich mehr als die Hälfte der Rechenleistung verwendet, z.B. drei Viertel oder mehr.

Der ausgewählte bzw. auszuwählende Bereich muss dabei nicht notwendigerweise ein zusammenhängender Bereich sein, es kann sich auch um separate Teil-Bereiche des Bildes handeln.

Dies erlaubt, für den ausgewählten Bereich - also einen Bereich des Bildes (und damit der Umgebung), der z.B. für besonders relevant hinsichtlich bestimmter Merkmale eingestuft wird - eine schnelle und trotzdem genaue Bestimmung bzw. Erkennung der Merkmale zu gewährleisten, während aber trotzdem auch in dem Rest des Bildes die Merkmale erkannt bzw. bestimmt werden. Im Vergleich zu einer gleichmäßigen Verwendung der Rechenleistung für das gesamte Bild kann die zur Verfügung stehende Rechenleistung also effizienter eingesetzt werden. Ebenso kann bei - für den ausgewählten Bereich - gleicher Geschwindigkeit und Genauigkeit bei der Erkennung von Merkmalen die nötige Rechenleistung reduziert werden. Dies erlaubt den Einsatz auch bei kleineren (mobilen) Geräten, in denen typischerweise weniger Rechenleistung zur Verfügung steht

Es wird also insbesondere künstliche Intelligenz bzw. "Deep Learning" (vorzugsweise künstliche neuronale Netze) verwendet, um eine semantische Segmentierung eines Bildes durchzuführen und relevante Segmente z.B. im Rasenbereich (im Falle eines Rasenmähroboters) zu erkennen. Dies erfolgt mit geringen Rechenressourcen und einer hohen Genauigkeit durch Fokussierung auf relevante Regionen, ohne den Kontext des gesamten Bildes zu verlieren. Dieser Ansatz verwendet insbesondere einen Datensatz, der für die Umgebung spezifisch ist, in der ein solches Gerät bzw. ein Roboter arbeiten würde, um ein Deep-Learning-Netzwerk zu trainieren, das sich auf die Segmentierung und Definition z.B. der richtigen Rasen- bzw. Grasgrenzen und anderer relevanter Objekte im Rasenbereich wie Bäume, Häuser, Gartengeräte, Menschen usw. konzentriert. Damit kann der interessierende Bereich im Bild besonders einfach und schnell ausgewählt werden.

Dieser Ansatz unterscheidet sich von ähnlichen Ansätzen, die im Bereich der selbstfahrenden Autos oder dergleichen im Zusammenhang mit der semantischen Segmentierung verwendet werden. Die semantische Segmentierung erfordert einen hohen Verarbeitungsaufwand, damit sie sowohl genau als auch schnell abläuft. Bei kleinen Geräten oder Fahrzeugen, die insbesondere in Bodennähe arbeiten, gilt dies auch, aber die Rechenleistung ist dort in aller Regel begrenzter als bei Hardware, die in Autos verwendet wird. Das Bild, bei dem die semantische Segmentierung vorgenommen werden soll (also das Eingabebild für die semantische Segmentierung) kann (oder jedenfalls sollte) auch nicht auf den interessierenden Bereich zugeschnitten werden, da der Kontext (also auch der Rest des Bildes, außerhalb des ausgewählten Bereichs) (auch) für ein kleineres und genaueres Netzwerk (künstliches neuronales Netz) sehr wichtig ist. Das Bild wird somit als Eingabe verwendet, ein bestimmter Bereich wird fokussiert (ausgewählt), ohne jedoch den Kontext des vollständigen Bildes zu verlieren, während es ermöglicht wird, schwierige Rechenoperationen auf einen solchen Bereich zu fokussieren, um sowohl den Durchsatz als auch die Genauigkeit zu verbessern.

Das vorgeschlagene Vorgehen ist außerdem robust(er) gegenüber unterschiedlichen Umgebungsänderungen im Bild, z.B. wenn der Blickwinkel der Kamera verschoben wird. Der Ansatz ist auch robust gegenüber Lichtänderungen in der Umgebung, Wetterbedingungen, Jahreszeiten, möglichen ähnlichen Objekten im Garten usw. Ein großes Problem bei künstlichen neuronalen Netzen zur semantischen Segmentierung besteht darin, dass sie komplex und zeitaufwändig sind, wenn sie genau sein sollen; wenn hohe Geschwindigkeit eine Anforderung ist, muss die Genauigkeit jedoch abnehmen, wenn das Netz klein ist. Der vorgeschlagene Ansatz ermöglicht es nunmehr, sowohl die Genauigkeit durch Beibehaltung des gesamten Bildes, als auch eine hohe Geschwindigkeit zu erreichen, indem ein kleines bzw. kleineres Netz verwendet wird, das sich hauptsächlich auf relevante Bereiche (den ausgewählten Bereich) des Bildes konzentriert.

Der vorgeschlagene Ansatz ist robuster, weil mehr Rechenleistung auf den fokussierten bzw. ausgewählten Bereich angewendet wird, ohne Kontextinformationen des gesamten Bildes zu verlieren. Der interessierende bzw. ausgewählte Bereich wäre normalerweise hauptsächlich die Bodenfläche, aber das Netzwerk benötigt z.B. Informationen über die Wetterbedingungen (beispielsweise sonnig oder bewölkt), um sich an die aktuelle Bodenfläche anzupassen. Wenn es z.B. sonnig ist, sieht das Gras bzw. der Rasen für die Kamera normalerweise grüner aus, als wenn es bewölkt ist. Wenn das Netzwerk in Richtung oder in Bezug auf die Farbe verzerrt wäre, würden in einem dieser beiden Szenarien Fehler auftreten. Mit Kontextinformationen kann es hingegen besser generalisiert (angepasst) werden.

Das vorgeschlagene Vorgehen ist insbesondere auch gegenüber anderen Deep-Learning-Lösungen insofern besonders, als sie auf die gestaltete Umgebung (z.B. Garten und Außenbereich) und auf Geräte bzw. Roboter ausgerichtet ist, die nahe (bzw. näher als z.B. selbstfahrende Autos) am Boden arbeiten.

Das segmentierte Bild kann z.B. verwendet werden, um die Rasenkante bzw. Grasgrenze von Rasenflächen abzugrenzen. Diese Abgrenzung ist, wie sich gezeigt hat, genau genug, um z.B. herkömmliche Begrenzungskabel ersetzen zu können. Ein Roboter, der näher am Boden operiert, muss sich mehr auf die Objekte und Grenzen in seiner Nähe konzentrieren, ohne allerdings weiter entfernte Objekte aus den Augen verlieren zu dürfen. Dieses Vorgehen kann auch verwendet werden, um dem Gerät bzw. Roboter z.B. die Abgrenzung des Gartens beizubringen, während er seine Grenzen neu einlernt bzw. kodiert, da es hilft, das Vorhandensein von Gras, Erde, Straße, Wasser, Schmutz, Blumenbeeten, Unkraut usw. zu erkennen, die im Garten bzw. in der Bodenebene vorhanden sind. Die Verwendung der Segmentierung kann auch bei der Lokalisierung helfen, indem sie den Kontext der Bildobjekte liefert und dabei hilft, ihre Umgebung zu verstehen.

Die Funktionsweise der meisten Methoden zur semantischen Segmentierung besteht darin, das gesamte Bild zu analysieren und für jeden Bereich denselben Satz von Rechenoperationen auszuführen, was dazu führt, dass auch dieselbe bzw. eine gleichmäßig verteilte Rechenleistung verwendet wird. Dies ist in anderen Bereichen aufgrund der Unvorhersehbarkeit des Aussehens der Objekte auf dem Bild (z.B. bei selbstfahrenden Autos) nützlich. Insbesondere bei kleinen autonomen Robotern sind der Einsatzbereich und die Perspektive aufgrund der Roboterabmessungen, Kamerakonfiguration, Platzierung und Ausrichtung jedoch gut definiert. Beispielsweise durch die Analyse mehrerer interner Datensätze (z.B. durch vorab durchgeführtes Trainieren) kann der Bereich, in dem z.B. Gras normalerweise im Bild erscheint, gemittelt werden und nach der Projektion auf das Bild kann ein interessierender Bereich ermittelt, also ausgewählt, werden.

Nichtsdestotrotz eignet sich das vorgeschlagene Vorgehen auch für andere Geräte, in denen Merkmale in Bildern der Umgebung erkannt werden sollen.

Der Bereich in dem Bild, für den die höhere Rechenleistung verwendet wird, wird in Abhängigkeit von einer Position des Umgebungserfassungsmittels (z.B. der Kamera) in dem Gerät, in Bezug auf eine Ebene oder Oberfläche (konkret den Untergrund), auf der sich das Gerät bewegt, ausgewählt. Vorteilhafterweise wird der Bereich in dem Bild auch in Abhängigkeit von einer aktuellen Position des Geräts innerhalb der Umgebung ausgewählt, zweckmäßigerweise hinsichtlich eines Betriebsbereichs des Geräts in der Umgebung. Das Vorgehen, um den interessierenden Bereich auszuwählen bzw. zu erhalten, wird insbesondere mathematisch durchgeführt, also z.B. indem die Kameraausrichtung in Bezug auf die Bodenebene analysiert und eine Grenze des Betriebsbereichs des Roboters ausgewählt wird; z.B. sollte der Roboter alle seine Objekte innerhalb von drei Metern erkennen können.

Im Rahmen der vorliegenden Erfindung empfängt ein künstliches neuronales Netz (oder Deep-Learning-Netzwerk) vorzugsweise ein Bild (oder auch ein Bildpaar), nachdem es von einer Lokalisierungs-Engine vorverarbeitet wurde, und führt eine Dimensionsreduktion über z.B. kleine oder wenige Faltungsschichten eines künstlichen neuronalen Netzes durch, typischerweise neben einem benutzerdefinierten Layout von Batch-Normalisierung, Pooling-Mechanismen und Aktivierungsfunktionen. Es werden dann Merkmale extrahiert. Dies kann zunächst für das gesamte Bild erfolgen.

Bildpaare können erfasst werden, um Tiefeninformationen zu generieren bzw. im Netzwerk zu erkennen. Dadurch wird der Informationsgehalt erhöht. Z.B. ist das Erkennen von Wänden eine Herausforderung, da sie normalerweise eine Farbe und eine geringere Textur haben; wenn eine Tiefeninformation vorhanden ist, können sie leichter erkannt und richtig segmentiert werden.

Eine Lokalisierungs-Engine wird insbesondere eingesetzt, um das aufgenommene Bild zu entzerren, d.h. insbesondere die Verzerrung des Objektivs, und ggf. auch eine Farbkorrektur durchzuführen.

Die Dimensionsreduktion hilft beispielsweise, die Anzahl der Eingaben bzw. Eingabewerte (für das neuronale Netz) zu reduzieren, um die Verarbeitung zu erleichtern, indem Faltungen ("convolutions") durchgeführt werden und auf relevante Merkmale fokussiert wird. Ein Bild mit z.B. lediglich 720 x 480 Pixel und drei Farbbits führt bereits zu 1.036.800 Eingabewerten, was in der Regel zu viel für die Verarbeitung ist. Pooling erreicht ein "Down-Sampling" durch Auswahl bestimmter Werte, die an die folgenden Schichten übergeben werden (z.B. würde das sog. "Max Pooling" in einer Matrix von 2x2 den Maximalwert auswählen und übergeben, wodurch eine Größe von 2x2 Pixel auf 1x1 reduziert wird).

Aktivierungsfunktionen sind z.B. wie logische Gatter in einer integrierten Schaltung. Sie entscheiden, welche Neuronen in jeder Stufe des neuronalen Netzes aktiviert werden, und entscheiden über die endgültige Ausgabe (für den Teil des Grases bzw. Rasens würden beispielsweise Neuronen aktiviert, die sich auf die spezifischen Grasmuster, Texturen und Farben konzentrieren). Die "Batch-Normalisierung" mildert das Problem der sog. internen Kovariantenverschiebung und glättet die Zielfunktion, indem die Eingaben in jedem Stapel (Batch) standardisiert werden.

Daneben wird auch ein interessierender Bereich des Bildes ausgewählt bzw. extrahiert, um - in dem ausgewählten Bereich des Bildes - einen weiteren Satz größerer Faltungen bzw. einer höheren Anzahl an Faltungen, ggf. neben anderen Operationen anzuwenden. Dies ermöglicht es dem künstlichen neuronalen Netz, das gesamte Bild zu berücksichtigen und schwerere Faltungskerne (also solche mit höherem Gewicht) auf den interessierenden bzw. ausgewählten Bereich zu fokussieren.

Mit anderen Worten werden also in dem ausgewählten Bereich mehr Rechenoperationen durchgeführt als beim Rest des Bildes. Dies kann z.B. erfolgen, indem für das gesamte Bild zunächst eine Merkmalserkennung durchgeführt wird, für den ausgewählten Bereich dann zusätzlich weitere Rechenoperationen, wodurch dort die Merkmale genauer bzw. besser erkannt werden. In dem ausgewählten Bereich können dann z.B. zusätzliche neuronale Netze verwendet werden. Denkbar ist aber auch, dass die Merkmalserkennung (von Anfang an) getrennt für den ausgewählten Bereich und den Rest des Bildes erfolgt. Hierbei können dann für den ausgewählten Bereich und den Rest des Bildes z.B. verschiedene künstliche neuronale Netze verwendet werden, die sich z.B. in der Tiefe und/oder in der Anzahl der Schichten unterscheiden.

Berechnungen (Faltung, Pooling, Batch-Normalisierung, Aktivierungen) für das gesamte Bild sind im Vergleich zu denen, die für den interessierenden (ausgewählten) Bereich durchgeführt werden, einfacher. Da das gesamte Bild ausgewertet wird, gehen keine Kontextinformationen verloren, sondern es wird mehr im interessierenden Bereich berechnet, sodass sich auf die Segmentierung konzentriert werden kann. Im oberen Bereich des Bildes z.B. ist normalerweise der (wenig interessante) Himmel, der keine relevanten Klassen enthält, die hilfreich sind, wenn die Rasenkannte erkannt werden soll; aber es ist relevant zu erkennen, ob es bewölkt, sonnig usw. ist. Im unteren Bereich des Bildes sind z.B. normalerweise Gras und die näheren Objekte (nahe am Roboter) vorhanden; daher werden insbesondere dort mehr Berechnungen durchgeführt, um genauere Segmentierungen zu erhalten.

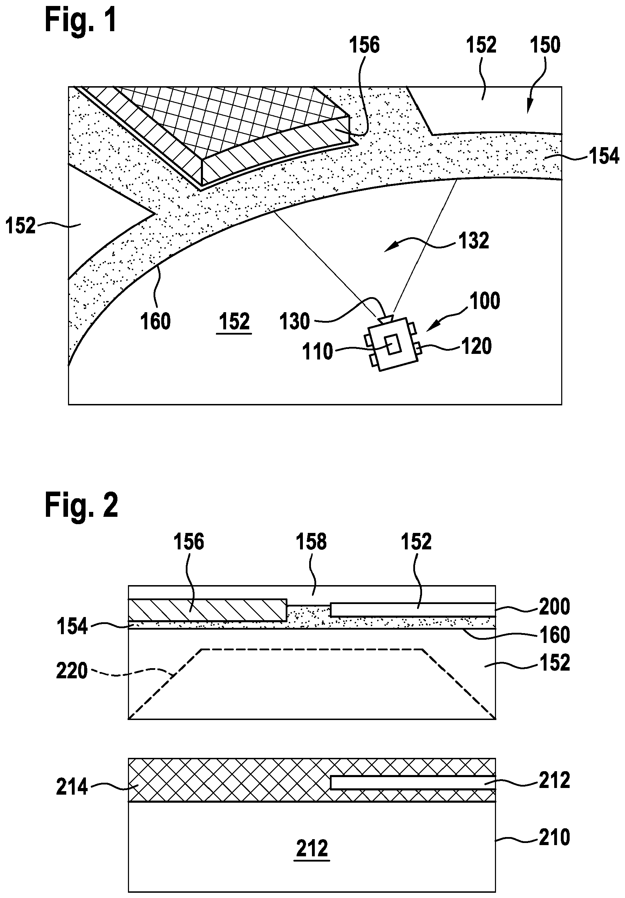

Da das Ergebnis der Merkmalserkennung (aufgrund der o.g. Dimensionsreduktion) herunterskaliert ist, können zuvor z.B. auch einige Werte (anhand welcher die Merkmale bestimmt oder extrahiert werden) gespeichert werden, damit das Hochskalieren des Ergebnisses genauer wird. Beim Herunterskalieren können Werte gespeichert und dann beim Hochskalieren wieder verwendet, um eine genauere Ausgabe zu erhalten. Wenn beispielsweiseeine 10x10-Matrix auf eine 2x2-Matrix verkleinert und dann am Ende wieder auf eine 10x10-Matrix vergrößert wird, wäre die Ausgabe (d.h. das resultierende Bild) verschwommen und ungenau. Wenn aber beispielsweise Zwischenwerte in einer 5x5-Matrix gespeichert werden, können diese gespeicherten Zwischenwerte beim Hochskalieren verwendet werde. Die extrahierten Merkmale können dann für die spezifischen Klassen (also z.B. Gras, Straße, Schmutz, Menschen, Haus usw.) ausgewählt, verkettet und mit Schwellenwerten versehen werden, und dann in eine Merkmalskarte hochskaliert werden, also die Wahrscheinlichkeiten jeder dieser Klassen im Bild gespeichert werden. Dies stellt dann das Ergebnisbild dar. Für eine detailliertere Erläuterung sei an dieser Stelle auch auf die Ausführungen zu den Figuren, insbesondere Figur 2, verwiesen.

Ein erfindungsgemäßes Rechensystem, beispielsweise eine Recheneinheit wie z.B. ein Steuergerät eines Roboters, ist, insbesondere programmtechnisch, dazu eingerichtet, ein erfindungsgemäßes Verfahren durchzuführen.

Die Erfindung betrifft außerdem ein Gerät, insbesondere ein mobiles Gerät, mit einem solchen Rechensystem (z.B. als Steuergerät) sowie einem Umgebungserfassungsmittel wie z.B. einer Kamera zum Erfassen eines Bildes der Umgebung. Das Gerät ist bevorzugt als Roboter, insbesondere als Rasenmähroboter, als Haushaltsroboter, z.B. Saug- und/oder Wischroboter, als Boden- oder Straßenreinigungsgerät, als zumindest teilweise automatisiertes Fahrzeug, oder als Drohne ausgebildet.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Schließlich ist ein maschinenlesbares Speichermedium vorgesehen mit einem darauf gespeicherten Computerprogramm wie oben beschrieben. Geeignete Speichermedien bzw. Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich. Ein solcher Download kann dabei drahtgebunden bzw. kabelgebunden oder drahtlos (z.B. über ein WLAN-Netz, eine 3G-, 4G-, 5G- oder 6G-Verbindung, etc.) erfolgen.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

- Figur 1: zeigt schematisch ein erfindungsgemäßes Gerät in einer bevorzugten Ausführungsform in einer Umgebung.
- Figur 2: zeigt ein Bild, das von einem Umgebungserfassungsmittel eines Geräts erfasst worden ist, und ein mittels semantischer Segmentierung daraus erzeugtes Ergebnisbild.
- Figur 3: zeigt schematisch einen Ablauf eines erfindungsgemäßen Verfahrens in einer bevorzugten Ausführungsform.

### Ausführungsform(en) der Erfindung

In Figur 1 ist schematisch ein erfindungsgemäßes Gerät 100 in einer bevorzugten Ausführungsform in einer Umgebung 150, z.B. einem Grundstück, dargestellt. Bei dem Gerät 100 kann es sich insbesondere um einen Rasenmähroboter mit Rädern 120, einem als Steuergerät ausgebildeten Rechensystem 110 sowie einer Kamera 130 mit einem Blickfeld 132 handeln. Zur besseren Veranschaulichung ist das Blickfeld 132 hier relativ klein gewählt; in der Praxis kann das Blickfeld aber z.B. mindestens 180° oder mindestens 270° betragen.

Die Umgebung bzw. das Grundstück 150 umfasst hier beispielhaft verschiedene Bereiche, nämlich Rasen 152 (eine große Rasenfläche unten im Bild sowie zwei kleinere links und oben rechts im Bild), einen Weg 154, der sich von links nach rechts im Bild erstreckt und zwei Abzweigungen nach oben aufweist, sowie eine Mauer oder Gartenmauer 156 zwischen diesen beiden Abzweigungen des Wegs.

Der Rasenmähroboter 100 soll sich selbständig über das Grundstück bewegen und dabei den Rasen 152 mähen. Hierzu ist es aber z.B. wichtig, dass der Rasenmähroboter 100 eine Grenze des Rasens, hier eine Rasenkante 160 zwischen dem großen Stück Rasen 152 unten und dem Weg 154 erkennt. Dies ist nötig, damit der Rasenmähroboter 100 z.B. nicht über diese Rasenkante 160 hinwegfährt oder jedenfalls nicht weiter mäht, wenn doch. Denkbar ist, dass der Rasenmähroboter über den Weg 154 zu den anderen Rasenflächen fahren darf oder soll, aber nicht mäht, während er sich auf dem Weg 154 befindet. Außerdem ist das Erkennen der Rasenkante 160 z.B. wichtig, um dran entlang fahren zu können, um dort zu mähen.

In Figur 2 ist in der oberen Darstellung ein Bild 200 gezeigt, das von einem Umgebungserfassungsmittel wie z.B. der Kamera 130 des Rasenmähroboters 100 aus Figur 1 erfasst worden ist. Darin sind die verschiedenen Stücke Rasen 152, der Weg 154 sowie die Mauer 156 zu sehen, ebenso ein Himmel 158. Hier ist bereits zu sehen, dass ein Großteil des Bildes 200 aus Rasen besteht, was sich insbesondere aufgrund der bodennahen Position des Rasenmähroboters 100 bzw. dessen Kamera 130 ergibt.

Die untere Darstellung zeigt ein Bild 210, bei dem es sich um ein mittels semantischer Segmentierung aus dem Bild 200 erzeugtes Ergebnisbild handelt. Hierbei werden aus dem Bild 200, z.B. für jeden Bildpunkt (Pixel), Merkmale extrahiert, anhand welcher dann z.B. jedem Bildpunkt eine von mehreren Klassen zugeordnet wird. Beispielhaft sollen nur die Klassen "Rasen" 212 und "kein Rasen" 214 verwendet werden, was für einen Rasenmähroboter durchaus ausreichend sein kann. In dem Ergebnisbild sind diese beiden Klassen weiß (212) und schraffiert (214) dargestellt; in der Praxis kann das in schwarz/weiß sein oder, bei mehr als zwei Klassen, in verschiedenen Farben; ebenso können verschiedene sonstige Merkmale verwendet werden, die sich digital verarbeiten lassen.

Wie erwähnt, kann bei der semantischen Segmentierung das gesamte Bild 200 gleichmäßig bearbeitet werden, insbesondere bei der Extraktion der Merkmale. Im Rahmen der vorliegenden Erfindung soll aber ein Bereich des Bildes 200 ausgewählt werden, bei dem, bezogen auf einen Anteil des ausgewählten Bereichs an dem (gesamten) Bild 200, ein höherer Anteil an Rechenleistung des ausführenden Rechensystems, z.B. der Steuereinheit 110 aus Figur 1, verwendet wird als für einen Rest des Bildes 200. Beispielhaft ist ein solcher, ausgewählter Bereich mit 220 bezeichnet; es handelt sich dabei um einen unteren, mittleren Bereich des Bildes 200.

Die Auswahl dieses Bereichs 220 kann insbesondere in Abhängigkeit von einer aktuellen Position des Rasenmähroboters 100 innerhalb der Umgebung 150 erfolgen, sowie aufgrund der Tatsache, dass sich dessen Kamera relativ nahe am Boden befindet. So kann z.B. berücksichtigt werden, dass ein Großteil des Bildes im unteren Bereich Rasen sein wird, was der besonderen Blickrichtung der Kamera eines Rasenmähroboters geschuldet ist. Aufgrund der Roboterkonfiguration und der Kameraplatzierung und -ausrichtung kann zumindest ungefähr bestimmt werden, wo die Horizontlinie (unter dem Himmel 158 in Figur 2) im Bild unter Annahme eines ebenen Bodens verlaufen wird. in der Regel wird daher der untere mittlere Teil des Bildes die relevanteren Merkmale (Rasen bzw. Rasenkante) enthalten.

Es kann also davon ausgegangen werden, dass sich die Rasenkante 160 in dem ausgewählten Bereich 220 befindet, jedenfalls dann, wenn sich der Roboter nahe genug an der Rasenkante 160 befindet, sodass dort eine semantische Segmentierung mit im Vergleich zum Rest erhöhter Rechenleistung sinnvoll ist; damit kann die Rasenkante 160 trotz insgesamt geringer Rechenleistung genau bestimmt werden.

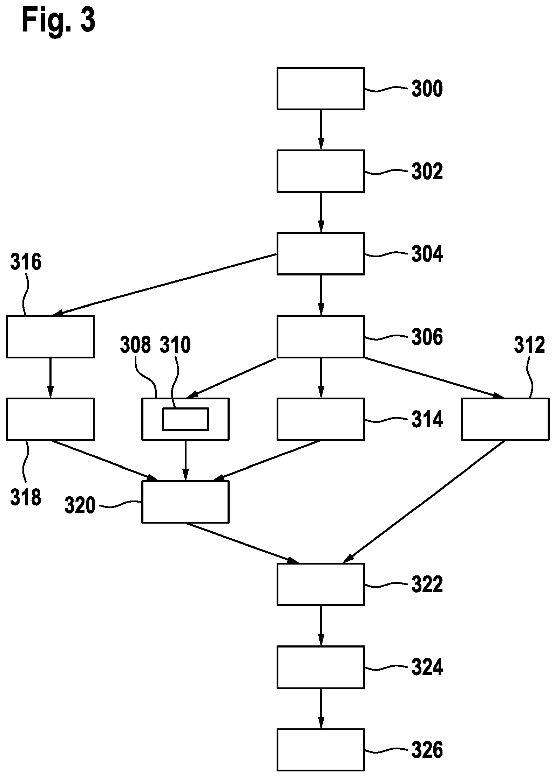

In Figur 3 ist schematisch ein Ablauf eines erfindungsgemäßen Verfahrens in einer bevorzugten Ausführungsform dargestellt, und zwar in Form eines Flussdiagramms. Dabei ist eine beispielhafte Reihenfolge von Schritten, die durchgeführt werden können, gezeigt.

In einem Schritt 300 wird ein Bild, wie z.B. das Bild 200 aus Figur 2, erfasst und an das Rechensystem übermittelt. Dort kann das Bild - als Eingangsbild - ggf. in einem Schritt 302 mittels eines Bildverarbeitungssystems vorverarbeitet werden, um Linsenverzerrungen, Lichtverhältnisse, Perspektive usw. zu korrigieren. Dann wird das (ggf. vorarbeitete) Bild zur Verarbeitung an ein künstliches neuronales Netz 304 weitergeleitet.

In einem Schritt 306 wird eine Dimensionsreduktion durchgeführt. Da die Berechnung aufgrund der Größe (Datenmenge) nicht für jedes Pixel des Bildes durchgeführt werden kann (oder werden soll), wird die Bilddimension über Faltungs-, Pooling-, Batch-Normalisierungs- und Aktivierungsfunktionen reduziert, wie oben erläutert.

Dann werden, in einem Schritt 308, Merkmale 310des Bildes z.B. basierend auf mehreren Faktoren wie Form, Farbe, Kontext, Muster, Lichtvarianz, Bildkontext extrahiert. Per Definition ist ein Merkmal z.B. eine individuell messbare Eigenschaft oder eine Charakteristik eines Phänomens. Für den Kontext eines neuronalen Netzwerks würde dies z.B. das Trainieren spezifischer Neuronen, sich auf bestimmte Eigenschaften des Bildes zu konzentrieren, bedeuten; einige Neuronen könnten sich auf Farbe, Muster, Texturen usw. konzentrieren. Unter dem Extrahieren von Merkmalen soll insbesondere verstanden werden, dass in einem Bild bestimmte Regionen bestimmte Neuronen aktivieren und ihr Wert das Netzwerk zur Analyse, Schwellenwertbestimmung und schließlich Segmentierung in die spezifische Klasse weiterleitet.

Ein Teil dieser Merkmale wird, in einem Schritt 312, gespeichert, um später ein einfaches und schnelles Hochskalieren zu gewährleisten, was bedeutet, dass sie dazu beitragen, das Ergebnis auf die Größe des ursprünglichen Eingabebildes zu skalieren, ohne die Auflösung zu verlieren. Das Netzwerk lernt auch die gespeicherten Werte; dies ist effizienter als eine Interpolation von Werten oder eine Interpolation des nächsten Nachbarn, da Kontextinformationen hinzugefügt werden. Um z.B. ein Quadrat hochzuskalieren, müssen normalerweise nur vier Punkte verwendet werden; um einen Kreis hochzuskalieren, wären - jedenfalls in der Bildverarbeitung - deutlich mehr Punkte nötig.

Außerdem können, in einem Schritt 314, ein kontextbewusstes ("context aware") Pooling, Batch-Normalisierung, Aktivierungsfunktionen und anderes durchgeführt werden. Unter "kontextbewusst" ist dabei zu verstehen, dass das Netzwerk kontextuelle Informationen extrahiert, z.B.: "Dieser Bildbereich sieht aus wie eine Tür, ein Fenster und eine Wand. Der ganze Bereich ist damit höchstwahrscheinlich ein Haus". Wenn dann in diesem "Haus" etwas gefunden wird, das höchstwahrscheinlich Himmel zu sein scheint, kann die Information verworfen werden, da sie nicht in den Kontext passt. Dies erleichtert bzw. führt dazu, dass in der Mitte des Himmels kein "Gras" erkannt wird, da dies kontextbewusst unmöglich ist.

In einem Schritt 316 wird ein Bereich des Bildes (z.B. der Bereich 220 aus Figur 2) ausgewählt; dieser Bereich kann auf zwei Arten bestimmt oder berechnet werden, nämlich z.B. indem ein vorhandener Datensatz an Bildern analysiert und der Prozentsatz des (aktuellen) Bildes, der Gras enthält, gemittelt wird. Ebenso kann z.B. eine Methode verwendet werden, die von den physikalischen Eigenschaften des Rasenmähroboters, der Platzierung der Kamera und ihrer Ausrichtung in Bezug auf die Grundfläche abhängt.

Auf den ausgewählten Bereich konzentrieren sich dann, in einem Schritt 318, die schwereren Faltungen oder ein größerer Satz von Operationen mittels des neuronalen Netzes, während auf den Rest des Bildes (nur) ein kleinerer Satz von Operationen angewendet wird.

Die resultierende Merkmalskarte wird dann, in einem Schritt 320, in ihre entsprechenden Klassen klassifiziert, z.B., aber nicht beschränkt auf: "Rasen" und "kein Rasen", wie in Figur 2 gezeigt. Die Ergebnisse der Berechnung für den Rest des Bildes und fokussierten Berechnung im ausgewählten Bereich auf dem Bild werden abgebildet und zu einer resultierenden klassifizierten Matrix 322 verkettet. Die klassifizierte Matrix (also ein Zwischenergebnis) wird dann in einer Dekodierungsphase mit den Residuen (die gespeicherten Merkmale bzw. Werte) der Kodierungsphase hochskaliert, Schritt 324, um, in Schritt 326, ein Ergebnisbild als Ausgabe zu erhalten, das dem Eingabebild in der Größe ähnelt.

Das Ergebnisbild kann dann z.B. gemappt und bei Bedarf nachbearbeitet werden (z.B. Indizierung der Klassen, Trennung der Ausgabeklassen, Schwellenwerte) und an mögliche Anwendungen weitergegeben werden.

Es können verschiedene Anordnungen oder eine unterschiedliche Reihenfolge dieses Ansatzes bzw. der Schritte gewählt werden; wie sich gezeigt hat, ist z.B. die Durchführung der Auswahl des interessierenden Bereichs nach der Dimensionsreduktion mit geringen Auswirkungen auf die Genauigkeit möglich und kann sogar bessere Inferenzzeiten erreichen. Auch die kontextbewusste Merkmalsauswahl kann sowohl im gesamten Bild als auch (nur) im ausgewählte Bereich erfolgen, z.B. je nach Anwendung und wie stark der Fokus auf den ausgewählten Bereich gelegt werden soll.

## Patentansprüche

1. Verfahren zur semantischen Segmentierung eines Bildes (200), das von einem Umgebungserfassungsmittel (130) eines sich automatisiert bewegenden Geräts (100) erfasst worden ist, mittels eines Rechensystems (110) mit einer Rechenleistung,
wobei das Bild (200) erhalten und in dem Bild ein Bereich (220) ausgewählt wird, wobei der Bereich (220) in dem Bild in Abhängigkeit von einer Position des Umgebungserfassungsmittels (130) in dem Gerät (100), in Bezug auf einen Untergrund, auf dem sich das Gerät (100) bewegt, ausgewählt wird,
wobei im Rahmen der semantischen Segmentierung Segmenten, insbesondere Bildpunkten, des Bildes (200) jeweils eine von mehreren Klassen (212, 214) zugeordnet wird,
wobei für den ausgewählten Bereich (220) des Bildes, bezogen auf einen Anteil des ausgewählten Bereichs an dem Bild, ein höherer Anteil der Rechenleistung verwendet wird als für einen Rest des Bildes, indem in dem ausgewählten Bereich (220) des Bildes mehr Rechenoperationen durchgeführt werden als in dem Rest des Bildes,
wobei ein klassifiziertes Ergebnisbild (210) erzeugt und insbesondere ausgegeben wird, und
wobei das Ergebnisbild zur Steuerung des Geräts (100) verwendet wird.

2. Verfahren nach Anspruch 1, wobei den Segmenten des Bildes (200) jeweils eine von mehreren Klassen zugeordnet wird, indem für die Segmente des Bildes jeweils Merkmale (310) bestimmt werden, und wobei die jeweilige Klasse basierend auf den Merkmalen zugeordnet wird.

3. Verfahren nach Anspruch 2, wobei die Bestimmung der Merkmale für den ausgewählten Bereich (220) und für den Rest des Bildes unter Verwendung von auf künstlicher Intelligenz basierenden Mustererkennungsverfahren, insbesondere künstlicher neuronaler Netze (304), vorgenommen wird, die eine unterschiedliche Tiefe aufweisen und/oder eine unterschiedliche Anzahl an Schichten aufweisen.

4. Verfahren nach Anspruch 3, wobei das Bild (200), insbesondere nur der Rest des Bildes, vor Bestimmung der Merkmale hinsichtlich zu berücksichtigender Dimensionen herunterskaliert wird.

5. Verfahren nach Anspruch 4, wobei das Bild (200) bzw. der Rest des Bildes, nach Bestimmung der Merkmale und vor der Zuordnung der Klassen (212, 214) wieder hochskaliert wird.

6. Verfahren nach einem der vorstehenden Ansprüche, wobei der Bereich (220) in dem Bild in Abhängigkeit von einer aktuellen Position des Geräts (100) innerhalb der Umgebung (150) ausgewählt wird.

7. Verfahren nach einem der vorstehenden Ansprüche, wobei als Gerät (100) ein Roboter, insbesondere ein Rasenmähroboter, ein Haushaltsroboter, wie z.B. ein Saug- und/oder Wischroboter, ein Boden- oder Straßenreinigungsgerät, ein zumindest teilweise automatisiertes Fahrzeug, oder eine Drohne verwendet wird.

8. Rechensystem (110), das dazu eingerichtet ist, alle Verfahrensschritte eines Verfahrens nach einem der vorstehenden Ansprüche durchzuführen.

9. Gerät (100), insbesondere mobiles Gerät, mit einem Umgebungserfassungsmittel (130) zum Erfassen eines Bildes (200) der Umgebung (150) und einem Rechensystem (110) nach Anspruch 8.

10. Gerät (100) nach Anspruch 11, das als Roboter, insbesondere als Rasenmähroboter, als Haushaltsroboter, z.B. Saug- und/oder Wischroboter, als Boden- oder Straßenreinigungsgerät, als zumindest teilweise automatisiertes Fahrzeug, oder als Drohne ausgebildet ist.

11. Computerprogramm, das ein Rechensystem (110) dazu veranlasst, alle Verfahrensschritte eines Verfahrens nach einem der Ansprüche 1 bis 7 durchzuführen, wenn es auf dem Rechensystem (110) ausgeführt wird.

12. Maschinenlesbares Speichermedium mit einem darauf gespeicherten Computerprogramm nach Anspruch 11.

## Claims

1. Method for semantic segmentation of an image (200) that has been captured by an environment capturing means (130) of an automatedly moving device (100), by means of a computing system (110) having a computing power,
wherein the image (200) is obtained and a region (220) is selected in the image, wherein the region (220) in the image is selected depending on a position of the environment capturing means (130) in the device (100), with respect to an underlying surface on which the device (100) is moving,
wherein, in the context of the semantic segmentation, segments, in particular pixels, of the image (200) are each assigned one of a plurality of classes (212, 214),
wherein, relative to a proportion of the image constituted by the selected region, a higher proportion of the computing power is used for the selected region (220) of the image than for the rest of the image by virtue of more computation operations being carried out in the selected region (220) of the image than in the rest of the image,
wherein a classified result image (210) is generated and in particular output, and
wherein the result image is used to control the device (100).

2. Method according to Claim 1, wherein the segments of the image (200) are each assigned one of a plurality of classes by virtue of features (310) being determined for each of the segments of the image, and wherein the respective class is assigned on the basis of the features.

3. Method according to Claim 2, wherein the determination of the features for the selected region (220) and for the rest of the image is performed using artificial intelligence-based pattern recognition methods, in particular artificial neural networks (304), which have a different depth and/or a different number of layers.

4. Method according to Claim 3, wherein, before the determination of the features, the image (200), in particular only the rest of the image, is downscaled with regard to dimensions to be taken into account.

5. Method according to Claim 4, wherein the image (200) or the rest of the image is upscaled again after the determination of the features and before the assignment of the classes (212, 214).

6. Method according to any of the preceding claims, wherein the region (220) in the image is selected depending on a current position of the device (100) within the environment (150).

7. Method according to any of the preceding claims, wherein the device (100) used is a robot, in particular a robotic lawnmower, a domestic robot, such as e.g. a robotic vacuum cleaner and/or mop, a floor or road cleaning device, an at least partially automated vehicle, or a drone.

8. Computing system (110) which is designed to carry out all the method steps of a method according to any of the preceding claims.

9. Device (100), in particular mobile device, comprising an environment capturing means (130) for capturing an image (200) of the environment (150) and a computing system (110) according to Claim 8.

10. Device (100) according to Claim 11, which is in the form of a robot, in particular a robotic lawnmower, a domestic robot, e.g. a robotic vacuum cleaner and/or mop, a floor or road cleaning device, an at least partially automated vehicle, or a drone.

11. Computer program which causes a computing system (110) to carry out all the method steps of a method according to any of Claims 1 to 7 when it is executed on the computing system (110).

12. Machine-readable storage medium with a computer program according to Claim 11 stored thereon.

## Revendications

1. Procédé de segmentation sémantique d'une image (200), laquelle a été capturée par un moyen de capture d'environnement (130) d'un dispositif à déplacement automatisé (100), au moyen d'un système informatique (110) doté d'une puissance de calcul,
dans lequel l'image (200) est obtenue et une zone (220) est sélectionnée
dans l'image, la zone (220) étant sélectionnée dans l'image en fonction d'une position du moyen de capture d'environnement (130) dans le dispositif (100) par rapport à un sol sur lequel le dispositif (100) se déplace,
dans lequel, dans le cadre de la segmentation sémantique, des segments, en particulier des pixels, de l'image (200) sont respectivement affectés à l'une d'une pluralité de classes (212, 214),
dans lequel une part plus élevée de la puissance de calcul est utilisée pour la zone sélectionnée (220) de l'image, par rapport à la part de la zone sélectionnée dans l'image, que pour le reste de l'image, en effectuant plus d'opérations de calcul dans la zone sélectionnée (220) de l'image que dans le reste de l'image,
dans lequel une image de résultat classifiée (210) est générée et en particulier délivrée en sortie, et
dans lequel l'image de résultat est utilisée pour commander le dispositif (100).

2. Procédé selon la revendication 1, dans lequel les segments de l'image (200) se voient respectivement affecter l'une d'une pluralité de classes, par le fait que des caractéristiques (310) sont respectivement déterminées pour les segments de l'image, et dans lequel la classe respective est affectée sur la base des caractéristiques.

3. Procédé selon la revendication 2, dans lequel la détermination des caractéristiques pour la zone sélectionnée (220) et pour le reste de l'image est effectuée à l'aide de procédés de reconnaissance de formes basés sur l'intelligence artificielle, en particulier des réseaux de neurones artificiels (304), lesquels présentent une profondeur différente et/ou présentent un nombre différent de couches.

4. Procédé selon la revendication 3, dans lequel l'image (200), en particulier seulement le reste de l'image, est soumise à une réduction d'échelle en ce qui concerne les dimensions à prendre en compte avant la détermination des caractéristiques.

5. Procédé selon la revendication 4, dans lequel l'image (200) ou le reste de l'image est à nouveau soumis à une augmentation d'échelle après la détermination des caractéristiques et avant l'affectation des classes (212, 214).

6. Procédé selon l'une quelconque des revendications précédentes, dans lequel la zone (220) dans l'image est sélectionnée en fonction d'une position actuelle du dispositif (100) à l'intérieur de l'environnement (150).

7. Procédé selon l'une quelconque des revendications précédentes, dans lequel on utilise en tant que dispositif (100) un robot, en particulier un robot tondeuse, un robot ménager, tel qu'un robot aspirateur et/ou laveur, un appareil de nettoyage des sols ou de rues, un véhicule au moins partiellement automatisé ou un drone.

8. Système informatique (110) conçu pour mettre en œuvre toutes les étapes de procédé d'un procédé selon l'une quelconque des revendications précédentes.

9. Dispositif (100), en particulier un dispositif mobile, comportant un moyen de capture d'environnement (130) pour capturer une image (200) de l'environnement (150) et un système informatique (110) selon la revendication 8.

10. Dispositif (100) selon la revendication 11, conçu sous la forme d'un robot, en particulier un robot tondeuse, un robot ménager, par exemple un robot aspirateur et/ou laveur, un appareil de nettoyage des sols ou des rues, d'un véhicule au moins partiellement automatisé ou d'un drone.

11. Programme informatique qui amène système informatique (110) à mettre en œuvre toutes les étapes de procédé d'un procédé selon l'une quelconque des revendications 1 à 7, lorsqu'il est exécuté sur le système informatique (110).

12. Support d'enregistrement lisible par machine, sur lequel est enregistré un programme informatique selon la revendication 11.
